# EUROPÄISCHE PATENTSCHRIFT

(11) **EP 3 390 192 B1**
(45) Veröffentlichungstag und Bekanntmachung des Hinweises auf die Patenterteilung: **15.09.2021**
(21) Anmeldenummer: 17714665.1
(22) Anmeldetag: 22.03.2017
(51) Int. Cl.: B61D 25/00, B60J 1/00

(54) **FAHRZEUGFENSTER**
VEHICLE WINDOW
FENÊTRE DE VÉHICULE

(30) Priorität: 30.03.2016 AT 502602016
(43) Veröffentlichungstag der Anmeldung: 24.10.2018
(73) Patentinhaber: Siemens Mobility Austria GmbH, 1210 Wien (AT)
(72) Erfinder: STEPHAN, Stefan, 1110 Wien (AT)
(74) Vertreter: Deffner, Rolf
(86) Internationale Anmeldenummer: PCT/EP2017/056785
(87) Internationale Veröffentlichungsnummer: WO 2017/167613

(56) Entgegenhaltungen:
- DE-A1- 19 541 270
- DE-A1-102010 060 169
- DE-U1- 20 017 935
- US-A- 2 167 772

## Beschreibung

### Technisches Gebiet

Die Erfindung betrifft ein Fahrzeugfenster, insbesondere für ein Schienenfahrzeug.

### Stand der Technik

Verglasungen von Fahrzeugen, insbesondere Schienenfahrzeugen können so montiert werden, dass eine Glasscheibe mittels eines Gummiklemmprofils an einem metallischen Teil des Fahrzeugs angeordnet ist. Dabei weist das Gummiklemmprofil zwei Schlitze zur Aufnahme der Scheibe bzw. des metallischen Teils auf. Dies führt zu preisgünstigen, aber optisch wenig ansprechenden Einbausituationen. Eine weitere Befestigungsart ist das Verkleben der Scheiben mit der Fahrzeugstruktur. Die ermöglicht eine bündige Montage der Scheibe mit der Außenhaut des Fahrzeugs, erschwert jedoch eine Reparatur beschädigter Scheiben enorm. Eine weitere Art der Befestigung von Fahrzeugverglasungen sieht sogenannte Klemmrahmen vor, welche fest mit der Fahrzeugstruktur verbunden sind und in welchen die Scheiben formschlüssig mittels Klemmgummiprofilen gehalten werden. Dadurch läßt sich einerseits ein guter optisch vorteilhaft wirkender Anschluß der Glasfläche an die Außenhaut erzielen, andererseits ist dabei ein Tausch einer Scheibe aus dem Fahrzeuginneren möglich. Allen Befestigungsarten ist gemein, dass die Fensterecken mit Radien ausgeführt werden müssen um Spannungskonzentrationen in Ecken der Außenhaut des Fahrzeugs zu vermeiden. Dies ist unabhängig ob das Fahrzeug in Integralbauweise aus Leichtmetallhohlkammerprofilen oder in Differentialbauweise aus beplankten Spanten hergestellt ist. Die für eckige Fensterrahmen erforderlichen Verstärkungen der Wagenkastenstruktur bedingen zusätzliche Bauteile und umfangreiche Schweißarbeiten was eine Forderung nach eckig gerahmten Fenstern nur sehr teuer umsetzbar macht.

Das Dokument DE 10 2010 060 169 A1 offenbart einen Fensterrahmen für ein Fahrzeug nach dem Stand der Technik.

### Darstellung der Erfindung

Der Erfindung liegt daher die Aufgabe zugrunde, ein Fahrzeugfenster anzugeben, bei welchem ein Tausch einer Glasscheibe durch das Fahrzeuginnere möglich ist und bei welchem ein unterschiedliches optisches Erscheinungsbild des Fensters von außerhalb des Fahrzeugs zu dem optischen Erscheinungsbild des Fensters von innerhalb des Fahrzeugs realisierbar ist.

Die Aufgabe wird durch ein Fahrzeugfenster, insbesondere für ein Passagierschienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Fahrzeugfenster, umfassend eine Glasscheibe und einen die Glasscheibe einfassenden Rahmen sowie einen Klemmgummi, welcher in eine umlaufende Ausnehmung in dem Rahmen formschlüssig einbringbar ist und welcher die Glasscheibe in ihrer Einbauposition hält, mit einer dem Fahrzeuginneren zugewandten Seite und einer Außenseite beschrieben, bei welchem die umlaufende Ausnehmung für den Klemmgummi an einer dem Fahrzeuginneren zugewandten Position des Rahmens angeordnet ist und der Rahmen von der Außenseite des Fahrzeugs eine Durchsichtsfläche mit verrundeten Ecken freigibt und der Rahmen von der Innenseite des Fahrzeugs eine Durchsichtsfläche mit kantigen Ecken freigibt.

Dadurch ist der Vorteil erzielbar, sowohl einen allfälligen Scheibentausch bei eingebautem Zustand des Fensters vom Fahrzeuginneren vornehmen zu können, als auch ein unterschiedliches optisches Erscheinungsbild der Fensteraußenseite und der Fensterinnenseite realisieren zu können.

Mit gegenständlicher Erfindung gelingt es, ein Fenster mit von außen gesehen verrundeten Kanten herstellen zu können welches von innen gesehen eckige Kanten aufweist. Dies ist insbesondere vorteilhaft, da dadurch sonst erforderliche Änderungen und Verstärkungen an der Struktur des Wagenkastens zur Aufnahme der mechanischen Spannungsspitzen entfallen können. Zur Umsetzung der Erfindung kann ein Fahrzeugwagenkasten ohne besondere Verstärkungen mit verrundeten Fensterausschnitten eingesetzt werden. Die verwendete Technologie (Integral- oder Differentialbauweise) ist dabei ohne Belang. Ein Fensterrahmen umfasst eine Glasscheibe mit verrundeten Ecken und weist eine sogenannte Befestigungsschnittstelle zu dem Wagenkasten, der Struktur des Fahrzeugs auf. Diese Befestigung erfolgt bei modernen Fahrzeugen meist mittels einer Klebeverbindung, sodass es vorteilhaft ist, den Rahmen mit einer für Klebeverbindungen geeigneten Fläche auszustatten.

Eine bevorzugte Ausführungsform der Erfindung sieht vor, den Rahmen mit Mitteln zur Herstellung einer Schraubverbindung mit der Fahrzeugstruktur auszustatten. Dazu können beispielsweise Schraubenlöcher oder Gewinde in dem Rahmen angeordnet sein.

Der Rahmen ist aus einem Metallprofil gefertigt, welches in die Umrißform des Fensters gebogen ist. In diesen Rahmen ist eine Glasscheibe eingefügt und mittels eines innen umlaufenden Klemmgummis gesichert. Dazu ist der Rahmen mit einer umlaufende Ausnehmung ausgestattet in welche der Klemmgummi eingebracht ist in der Ausnehmung mittels Formschluß sitzt.

Dabei ist der Rahmen in seine die Glasscheibe umfassende Form gebogen, sodass diese allseits umfasst ist. Dabei kann der Rahmen mittels eines Schweißverfahrens zu einer beliebigen Form, im Allgemeinen jedoch rechteckigen Form geschlossen werden. Im Anschluß daran ist der Rahmen mechanisch mittels eines spanenden Verfahrens von der Innenseite her zu bearbeiten, sodass aus der Grundform mit verrundeten Ecken eine Ausnehmung mit kantigen Ecken geformt wird. Verbleibende Rundungen in den Ecken können durch die Wahl des eingesetzten spanenden Verfahrens (im Allgemeinen ein Fräsverfahren) bedingt sein. Mittels geeigneter Endbearbeitung mit Fräsern kleinen Durchmessers können diese verbleibenden Rundungen minimiert werden.

Dabei wird ein Rahmen geschaffen, welcher sich in eine konventionelle Einbauöffnung mit verrundeten Ecken einbauen läßt, der der Glasscheibe mit entsprechend verrundeten Ecken aufnimmt, jedoch von innen eine mit geraden Linien begrenzte Durchsichtsfläche bietet. Da der Rahmen von der Innenseite her mechanisch bearbeitet ist, erlaubt er von innen her eine größere Durchsichtsfläche durch die Glasscheibe als von außen her. Dadurch kann von innen auf Teile des Rahmens an der Außenseite gesehen werden. Dies kann durch eine entsprechende Gestaltung des Klemmgummis oder durch eine Beschichtung der Glasscheibe an den betroffenen Stellen verhindert werden.

Erfindungsgemäß ist der Rahmen zweiteilig aus einem Außenrahmen und einem Innenrahmen ausgeführt, wobei die Trennlinie zwischen dem Außenrahmen und dem Innenrahmen parallel zu Scheibenende ausgerichtet ist. Durch diese Maßnahme kann die Fertigung des Rahmens vereinfacht werden, da dabei als Innenrahmen jeweils zueinander auf Gehrung zugeschnittene Metallprofile einsetzbar sind, was die komplizierten spanende Bearbeitung entfallen lässt und nur mehr einfache Trennschnitte erforderlich macht.

Die Verbindung des Außen- mit dem Innenrahmen kann beispielsweise mittels einer Schraub- oder einer Klebeverbindung erfolgen.

In weiterer Fortbildung der Erfindung empfiehlt es zwischen dem Rahmen und der Glasscheibe an der dem Klemmgummi abgewandten Seite der Glasscheibe ein Außenklemmgummi eingefügt. Dadurch ist der Vorteil erzeilbar, eine sicherere Abdichtung der Glasscheibe gegen den Eintritt von Feuchtigkeit von außen gewährleisten zu können.

Eine besondere Ausführungsform der Erfindung sieht vor, den Klemmgummi mit einer Ausformung auszustatten, welche in Einbaulage des Klemmgummis an einem Innenausbauteil des Fahrzeugs aufliegt. Solcherart kann ein optischer und funktioneller Anschluß des Fensters an den Fahrzeuginnenausbau erzielt und allfällige Spalte damit überbrückt werden.

### Kurzbeschreibung der Zeichnungen

Es zeigen beispielhaft:
- **Fig.1**: Fahrzeugfenster.
- **Fig.2**: Fahrzeugfenster mit geteiltem Rahmen.
- **Fig.3**: Ansicht von außen.
- **Fig.4**: Ansicht von innen.

### Ausführung der Erfindung

**Fig.l** zeigt beispielhaft und schematisch ein Fahrzeugfenster. Es ist ein Schnitt durch einen Rahmen 1 eines Fahrzeugfensters in eingebautem Zustand gezeigt, welches an einer Fahrzeugstruktur 5 mittels einer Klebung 7 befestigt ist. Der Rahmen 1 ist zur Aufnahme einer Glasscheibe 4 ausgeführt, welche mittels eines Klemmgummis 3 in ihrer Einbaulage gehalten ist. Der Klemmgummi 3 ist an der Fahrzeuginnenseite des Rahmens 3 angeordnet und weist eine Ausformung auf, welche sich in Richtung eines Innenausbauteils 6 erstreckt und einen Spalt zwischen dem Rahmen 1 und dem Innenausbauteil 6 überbrückt. Der Klemmgummi 3 ist formschlüssig in einer korrespondierenden Ausnehmung des Rahmens 3 gehalten. Ein Außenklemmgummi 2 zwischen dem Rahmen 1 und der Glasscheibe 4 dichtet zwischen diesen Bauteilen gegen Feuchtigkeit ab. Der Rahmen 1 ist in gezeigtem Ausführungsbeispiel aus einem Metallprofil gefertigt, welches eine Hohlkammer aufweist und in die entsprechende Form gebogen, sodass er in seinem Verlauf die Glasscheibe 4 umschließt. Die Außenseite des Rahmens 1 folgt dem durch den Biegevorgang vorgegebenen Verlauf, die Innenseite ist mechanisch spanend bearbeitet und somit aus geraden Abschnitten mit kantigen Ecken begrenzt und gibt eine solche, mit kantigen Ecken begrenzte Durchsichtsfläche frei. Dadurch ist der Klemmgummi 3 aus einer Mehrzahl gerader Abschnitte zusammengestellt.

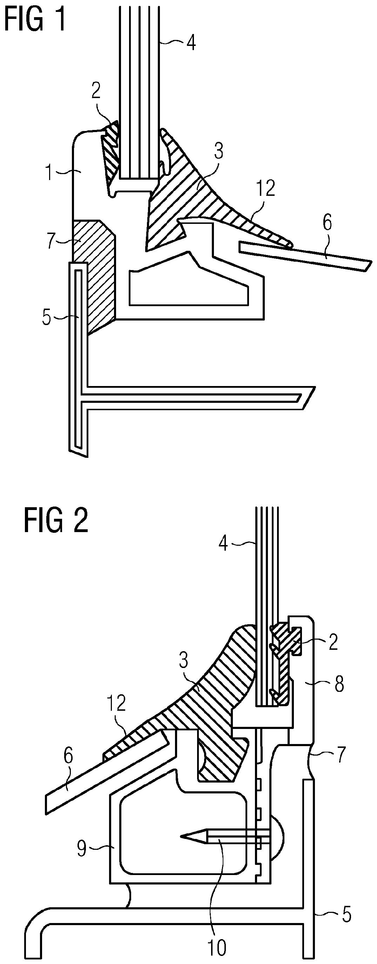

**Fig.2** zeigt beispielhaft und schematisch ein Fahrzeugfenster mit geteiltem Rahmen. Es ist ein dem in Fig.1 gezeigten Ausführungsbeispiel ähnliches Fahrzeugfenster dargestellt, bei welchem jedoch ein zweiteiliger Rahmen, gebildet aus einem Außenrahmen 8 und einem Innenrahmen 9 vorgesehen ist. Die weiteren Bauteile, wie der Klemmgummi 3, die Glasscheibe 4, der Außenklemmgummi 2 sind äquivalent zu dem in Fig. gezeigtem Beispiel ausgeführt. Der Außenrahmen 8 ist aus einem gebogenen Metallprofil gefertigt, welches die Glasscheibe 4 entlang ihres Umfangs umfasst. Der Innenrahmen 9 ist aus mehreren geraden Stücken eines Metallprofils gefertigt, die an ihren jeweiligen Verbindungsstellen auf Gehrung geschnitten sind und somit kantige Ecken bilden, und somit eine kantige Durchsichtsfläche durch die Glasscheibe 4 freigeben.

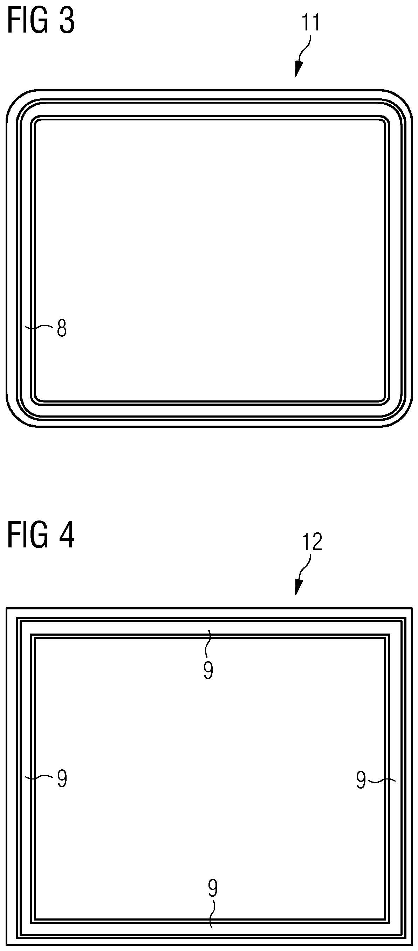

**Fig.3** zeigt beispielhaft und schematisch eine Ansicht auf ein Fahrzeugfenster von außen. Es ist eine Außenansicht 11 auf ein Fahrzeugfenster dargestellt, welches einen Außenrahmen 8 aufweist, der in die Für Fahrzeugfenster typische rechteckige Form mit verrundeten Ecken gebogen ist.
**Fig.4** zeigt beispielhaft und schematisch eine Ansicht auf ein Fahrzeugfenster von innen. Es ist eine Innenansicht 12 auf ein erfindungsgemäßes Fahrzeugfenster dargestellt, welches einen Innenrahmen 9 aufweist, der aus vier Metallprofilen aufgebaut ist die zueinander auf Gehrung geschnitten sind, sodass die Innenansicht 12 eine rechteckige Form mit kantige Ecken darstellt.

### Liste der Bezeichnungen

- 1: Rahmen
- 2: Außenklemmgummi
- 3: Klemmgummi
- 4: Glasscheibe
- 5: Fahrzeugstruktur
- 6: Innenausbauteil
- 7: Klebung
- 8: Außenrahmen
- 9: Innenrahmen
- 10: Schraubverbindung
- 11: Außenansicht
- 12: Innenansicht

## Patentansprüche

1. Fahrzeugfenster, umfassend eine Glasscheibe (4) und einen die Glasscheibe (4) einfassenden Rahmen (1) sowie einen Klemmgummi (3), welcher in eine umlaufende Ausnehmung in dem Rahmen (1) formschlüssig einbringbar ist und welcher die Glasscheibe (4) in ihrer Einbauposition hält, mit einer dem Fahrzeuginneren zugewandten Seite und einer Außenseite, wobei die umlaufende Ausnehmung für den Klemmgummi (3) an einer dem Fahrzeuginneren zuwandten Position des Rahmens (1) angeordnet ist und der Rahmen (1) von der Außenseite des Fahrzeugs eine Durchsichtsfläche mit verrundeten Ecken freigibt,
**dadurch gekennzeichnet, dass** der Rahmen von der Innenseite des Fahrzeugs eine Durchsichtsfläche mit kantigen Ecken freigibt, wobei der Rahmen (1) zweiteilig aus einem Außenrahmen (8) und einem Innenrahmen (9) ausgeführt ist, wobei die Trennlinie zwischen dem Außenrahmen (8) und dem Innenrahmen (9) parallel zu Scheibenende ausgerichtet ist und wobei der Außenrahmen (8) aus mindestens zwei untereinander stumpf verschweißten Metallprofilen aufgebaut ist und wobei der Innenrahmen (9) aus mehreren, jeweils zueinander auf Gehrung zugeschnittenen Metallprofilen aufgebaut ist.

2. Fahrzeugfenster nach Anspruch 1, **dadurch gekennzeichnet, dass** Rahmen (1) eine Klebefläche zur Herstellung einer Klebeverbindung (7) mit der Struktur (5) des Fahrzeugs umfasst.

3. Fahrzeugfenster nach Anspruch 1, **dadurch gekennzeichnet, dass** Rahmen (1) mit Mitteln zur Herstellung einer Schraubverbindung mit der Struktur (5) des Fahrzeugs ausgestattet ist.

4. Fahrzeugfenster nach einem der Ansprüche 1 bis 3, **dadurch gekennzeichnet, dass** zwischen dem Rahmen (1) und der Glasscheibe (4) an der dem Klemmgummi (3) abgewandten Seite der Glasscheibe (4) ein Außenklemmgummi (2) eingefügt ist.

5. Fahrzeugfenster nach einem der Ansprüche 1 bis 4, **dadurch gekennzeichnet, dass** der Klemmgummi (3) eine Ausformung aufweist, welche in Einbaulage des Klemmgummis (3) an Innenausbauteilen (6) des Fahrzeugs anliegt.

## Claims

1. Vehicle window, comprising a glass pane (4) and a frame (1) which surrounds the glass pane (4), as well as a rubber clamp (3) which can be introduced into a peripheral recess in the frame (1) with a positive fit and which holds the glass pane (4) in its installation position, with a side facing towards the vehicle interior and an outer side,
wherein the peripheral recess for the rubber clamp (3) is arranged at a position on the frame (1) facing towards the vehicle interior and the frame (1) enables a viewing area with rounded corners from the outer side of the vehicle, **characterised in that** the frame enables a viewing area with angular corners from the inner side of the vehicle, wherein the frame (1) is designed in a two-part manner consisting of an outer frame (8) and an inner frame (9), wherein the dividing line between the outer frame (8) and the inner frame (9) is oriented in parallel with ends of the pane and wherein the outer frame (8) is constructed from at least two metal profiles which are butt-welded to one another and wherein the inner frame (9) is constructed from a plurality of metal profiles with a mitre cut in relation to one another.

2. Vehicle window according to claim 1,
**characterised in that** the frame (1) comprises an adhesive area for producing an adhesive connection (7) with the structure (5) of the vehicle.

3. Vehicle window according to claim 1,
**characterised in that** the frame (1) is equipped with means for producing a screw connection with the structure (5) of the vehicle.

4. Vehicle window according to one of claims 1 to 3, **characterised in that** an outer rubber clamp (2) is inserted between the frame (1) and the glass pane (4) on the side of the glass pane (4) facing away from the rubber clamp (3).

5. Vehicle window according to one of claims 1 to 4, **characterised in that** the rubber clamp (3) has a form which rests against inner expansion parts (6) of the vehicle when the rubber clamp (3) is in the installation position.

## Revendications

1. Fenêtre de véhicule, comprenant une vitre (4) et un cadre (1) enserrant la vitre (4) ainsi qu'un joint de serrage en caoutchouc (3) susceptible d'être inséré par complémentarité de forme dans une gorge périphérique du cadre (1) et maintenant la vitre (4) dans sa position de montage, comprenant un côté tourné vers l'intérieur du véhicule et un côté extérieur,
dans laquelle la gorge périphérique destinée au joint de serrage (3) en caoutchouc est disposée à un endroit du cadre (1) orienté vers l'intérieur du véhicule et le cadre (1) dégage une surface transparente à coins arrondis depuis l'extérieur du véhicule, **caractérisée en ce que**
le cadre dégage une surface transparente à coins angulaires depuis l'intérieur du véhicule en étant réalisé en deux parties à partir d'un cadre extérieur (8) et d'un cadre intérieur (9), la ligne de séparation entre le cadre extérieur (8) et le cadre intérieur (9) étant orientée parallèlement à l'extrémité de la vitre et le cadre extérieur (8) étant réalisé en au moins deux profilés métalliques soudés bout à bout l'un à l'autre, et le cadre intérieur (9) étant réalisé en plusieurs profilés métalliques coupés chacun en onglet l'un par rapport à l'autre.

2. Fenêtre de véhicule selon la revendication 1, **caractérisée en ce que** le cadre (1) comporte une surface de collage pour permettre la réalisation d'un assemblage collé (7) avec la structure (5) du véhicule.

3. Fenêtre de véhicule selon la revendication 1, **caractérisée en ce que** le cadre (1) est pourvu de moyens permettant la réalisation d'un assemblage par vis avec la structure (5) du véhicule.

4. Fenêtre de véhicule selon l'une des revendications 1 à 3,
**caractérisée en ce qu'** un joint de serrage en caoutchouc extérieur (2) est inséré entre le cadre (1) et la vitre (4) sur le côté détourné du joint de serrage (3) en caoutchouc de la vitre (4).

5. Fenêtre de véhicule selon l'une des revendications 1 à 4,
**caractérisée en ce que** le joint de serrage en caoutchouc (3) comporte une forme se serrant, en position de montage du joint de serrage (3) en caoutchouc, contre des éléments de construction intérieurs (6) du véhicule.
